(19) Europäisches Patentamt
European Patent Office
Office européen des brevets

(11) **EP 3 389 970 B1**

(12) **FASCICULE DE BREVET EUROPEEN**

(45) Date de publication et mention de la délivrance du brevet:
**24.06.2020 Bulletin 2020/26**

(21) Numéro de dépôt: **16812991.4**

(22) Date de dépôt: **17.11.2016**

(51) Int Cl.:
**B29B 11/14** *(2006.01)*    *B29C 49/06 (2006.01)*

(86) Numéro de dépôt international:
**PCT/FR2016/052980**

(87) Numéro de publication internationale:
**WO 2017/103361 (22.06.2017 Gazette 2017/25)**

(54) **PRÉFORME À FOND CONCAVE A ÉPAISSEUR ÉVOLUTIVE**

VORFORM MIT KONKAVEM BODEN UND SICH ENTWICKELNDER DICKE

PREFORM WITH A CONCAVE BOTTOM AND AN EVOLVING THICKNESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2015 FR 1562520**

(43) Date de publication de la demande:
**24.10.2018 Bulletin 2018/43**

(73) Titulaire: **Sidel Participations**
**76930 Octeville-sur-Mer (FR)**

(72) Inventeur: **BUNEL, Christophe**
**76930 Octeville-sur-Mer (FR)**

(74) Mandataire: **Sidel Group**
**c/o Sidel Participations**
**Avenue de la Patrouille de France**
**76930 Octeville-sur-mer (FR)**

(56) Documents cités:
**US-A- 3 966 382    US-A1- 2013 244 050**

• **DATABASE WPI Week 198802 Thomson Scientific, London, GB; AN 1988-011703 XP002760560, -& JP S62 275710 A (YOSHINO KOGYOSHO CO LTD) 30 novembre 1987 (1987-11-30)**

**Description**

L'invention a trait à la fabrication des récipients à partir de préformes en matière plastique, notamment en polytéréphtalate d'éthylène (PET).

Plus précisément, l'invention concerne une préforme destinée au formage d'un récipient par soufflage ou étirage soufflage au sein d'un moule à l'empreinte du récipient.

Un récipient comprend ordinairement une paroi latérale généralement symétrique de révolution, qui s'étend suivant un axe central, un col qui s'étend dans le prolongement de la paroi latérale et par lequel le récipient est destiné à être rempli et vidé, et un fond qui s'étend transversalement à partir d'une extrémité inférieure du corps et par lequel le récipient est destiné à reposer sur une surface plane.

Une préforme comprend ordinairement un corps de forme sensiblement cylindrique (destiné à former la paroi latérale du récipient), un col ouvert qui s'étend dans le prolongement du corps à partir d'une extrémité supérieure de celui-ci, et dont il est séparé par une collerette (le col demeure inchangé au cours du processus de formage du récipient), ainsi qu'un fond qui ferme le corps à une extrémité inférieure de celui-ci (et destiné à former le fond du récipient).

Quelle que soit la forme du fond du récipient à former, la grande majorité des préformes ont un fond de forme convexe, hémisphérique ou plus généralement bombée vers l'extérieur, cf. par ex. la demande de brevet européen EP 2 697 024 (Sidel) ou son équivalent américain US 2014/030461. Or, dans leur grande majorité, les récipients ont un fond concave. On comprend donc qu'au cours du formage, la matière du fond doit, à partir d'un profil convexe, se retourner pour adopter un profil concave. Ce retournement induit dans la matière des contraintes qui peuvent générer des microfissures. De telles microfissures sont susceptibles de se propager lorsque le récipient est mis sous pression. On note même des cas de rupture dans certaines applications (c'est typiquement le cas de certains récipients à fond pétaloïde, pourvus d'une alternance de pieds en saillie et de vallées en creux et destinés aux boissons carbonatées). Le risque de fissuration (et de rupture) est aggravé par la tendance du marché, en quête d'économies de matière et de réduction des émissions polluantes, à imposer une diminution du poids (et donc de l'épaisseur) des préformes. Ce risque est également aggravé par l'augmentation des cadences de production (plusieurs dizaines de milliers de récipient produits par heure et par machine), qui induit une diminution du temps de cycle de fabrication individuel du récipient. Il en résulte une diminution du temps de contact du récipient avec le moule, et donc un refroidissement moins bon du récipient.

Ajoutons que certaines matières plastiques (c'est notamment le cas du PET, très largement employées dans la fabrication des récipients) ont un effet mémoire de forme, c'est-à-dire qu'après avoir été déformées plastiquement à partir d'une forme initiale stable (vitreuse dans le cas d'une préforme en PET), ces matières subissent, au cours du temps, des contraintes internes qui les fait tendre vers leur forme initiale.

Dans le cas des récipients, cet effet mémoire induit des déformations non désirées sur les fonds des récipients, qui deviennent alors instables et dont la résistance mécanique diminue, accompagnant une diminution de la garde (c'est-à-dire la distance, mesurée axialement, entre le centre du fond et le plan de pose défini par celui-ci).

En première approche, on pourrait imaginer qu'il suffit de rendre concave le fond des préformes, comme illustré dans la demande de brevet américain US 2013/0244050 (Husky).

Si une telle forme permet effectivement d'amoindrir l'effet mémoire, en revanche il faut malheureusement constater qu'elle ne suffit pas à résoudre le problème de la fissuration, qui se révèle plus subtil qu'il n'y paraît. En particulier, même obtenus à partir de préformes à fond concave, les fonds pétaloïdes souffrent souvent du phénomène de fissuration, surtout sur les bords internes des pieds, à la jonction avec une voûte centrale du fond. On observe d'ailleurs, ce qui peut expliquer en partie ce phénomène, que cette jonction forme également, au niveau moléculaire, la limite entre une zone (les pieds) dans laquelle la matière est relativement étirée (et donc assez cristalline) et une zone (le centre) dans laquelle la matière est relativement plus amorphe.

Un objectif est par conséquent de proposer une préforme dont la géométrie permette de diminuer les risques de fissuration.

A cet effet, il est proposé, en premier lieu, une préforme de récipient en matière plastique, qui comprend :

- un corps symétrique de révolution autour d'un axe central,
- un col ouvert qui s'étend dans le prolongement du corps à partir d'une extrémité supérieure de celui-ci, et
- un fond qui ferme le corps à partir d'une extrémité inférieure de celui-ci, le fond étant symétrique de révolution autour de l'axe central et ayant une concavité centrale et un bourrelet en saillie autour de cette concavité, le fond présentant une épaisseur $E$ variable, mesurée à partir d'une face externe,

cette préforme étant telle que, dans tout plan de coupe passant par l'axe central, l'épaisseur $E$ du fond vérifie les critères géométriques (R4.1), (R4.2) et (R4.3) ci-après, étant donnés :

$S$        l'abscisse curviligne mesurée sur la face externe, à partir de l'axe central qui en fait office d'origine ;

*L*    la demi-longueur curviligne totale du fond, mesurée sur la face externe à partir de l'axe central jusqu'à l'extrémité inférieure du corps ;

$S_1$    une valeur de l'abscisse *S* curviligne telle que $0,2 \cdot L \leq S_1 \leq 0,3 \cdot L$ ;

$S_2$    une valeur de l'abscisse *S* curviligne telle que $0,4 \cdot L \leq S_2 \leq 0,6 \cdot L$ ;

$E_0$    l'épaisseur de la préforme à l'extrémité inférieure du corps ;

$[0;S_1]$    une section centrale du fond, définie par une abscisse *S* curviligne comprise entre l'origine et $S_1$ ;

$[S_1;S_2]$    une section intermédiaire du fond, définie par une abscisse *S* curviligne comprise entre $S_1$ et $S_2$ ;

$[S_2;L]$    une section périphérique du fond, définie par une abscisse *S* curviligne comprise entre $S_2$ et *L* ;

(R4.1)    dans la section $[0;S_1]$ centrale du fond, l'épaisseur *E* de la préforme est telle que :

$$0,65 \cdot E_0 \leq E \leq 0,95 \cdot E_0$$

(R4.2)    dans la section $[S_1;S_2]$ intermédiaire du fond, l'épaisseur *E* de la préforme est strictement inférieure à sa valeur en tout point de la section centrale ;

(R4.3)    dans la section $[S_2;L]$ périphérique du fond, l'épaisseur *E* de la préforme est croissante.

Il a pu être vérifié, lors du formage de récipients à fond pétaloïde à partir de telles préformes, une diminution sensible des phénomènes de fissuration, notamment sur les bords internes des pieds, à la jonction avec la voûte centrale du fond.

Diverses caractéristiques supplémentaires peuvent être prévues, seules ou en combinaison :

-    dans la section $[0;S_1]$ centrale du fond, l'épaisseur *E* de la préforme est telle que :

$$0,70 \cdot E_0 \leq E \leq 0,80 \cdot E_0$$

avec, de préférence :

$$E \cong 0,75 \cdot E_0$$

-    dans la section $[S_1;S_2]$ intermédiaire du fond, l'épaisseur *E* de la préforme est telle que :

$$E \cong 0,70 \cdot E_0$$

-    la préforme vérifie en outre la règle géométrique (R1) suivante :

$$0,2 \cdot D \leq d \leq 0,5 \cdot D \qquad (R1)$$

avec, de préférence :

$$d \cong 0,35 \cdot D$$

où :

*d* est le diamètre d'une extrémité du fond, définie par le bourrelet ;
*D* est le diamètre externe du corps, mesuré à la jonction avec le fond ;

-    la préforme vérifie en outre la règle géométrique (R2) suivante :

$$0,02 \cdot D \leq h \leq 0,08 \cdot D \qquad (R2)$$

avec, de préférence :

$$h \cong 0,05 \cdot D$$

où $h$ est la garde du fond, mesurée entre le centre du fond et l'extrémité formée par le bourrelet ;
- la préforme vérifie en outre la règle géométrique (R3) suivante :

$$4° \leq A \leq 38° \qquad (R3)$$

avec, de préférence :

$$30° \leq A \leq 35°$$

où $A$ est l'angle que forme, avec tout plan transversal perpendiculaire à l'axe central, la tangente, sur la face externe de la préforme, à un point d'inflexion situé à la jonction entre la concavité centrale et le bourrelet.

Il est proposé, en deuxième lieu, un moule pour le formage d'une préforme telle que présentée ci-dessus, ce moule comprenant :

- un corps de moule ayant une paroi latérale à l'empreinte d'une face externe du corps de la préforme et un fond de moule à l'empreinte d'une face externe du fond de la préforme ;
- un noyau à l'empreinte d'une face interne de la préforme.

D'autres objets et avantages de l'invention apparaîtront à la lumière de la description d'un mode de réalisation, faite ci-après en référence aux dessins annexés dans lesquels :

- la figure 1 est une vue en coupe d'une préforme de récipient, selon un premier mode de réalisation ;
- la figure 2 est une vue en coupe d'une préforme de récipient, selon un deuxième mode de réalisation ;
- la figure 3 est une vue en coupe d'une préforme de récipient, selon un troisième mode de réalisation ;
- la figure 4 est une vue de détail de la préforme de la figure 1, selon l'encadré IV ;
- la figure 5 est une vue de détail de la préforme de la figure 2, selon l'encadré V ;
- la figure 6 est une vue de détail de la préforme de la figure 3, selon l'encadré VI ;
- la figure 7 est une vue en coupe d'un moule permettant de former la préforme des figures 3 et 6 ;
- la figure 8 est une vue en coupe du fond d'un récipient, de forme pétaloïde, formé à partir d'une préforme telle qu'illustrée sur les figures 1 à 6, et plus particulièrement à partir de la préforme des figures 3 et 6.

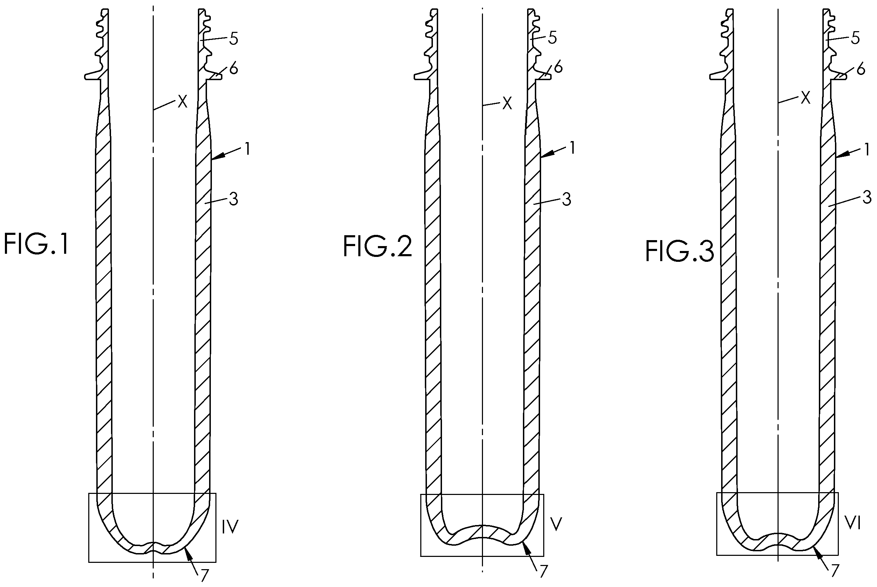

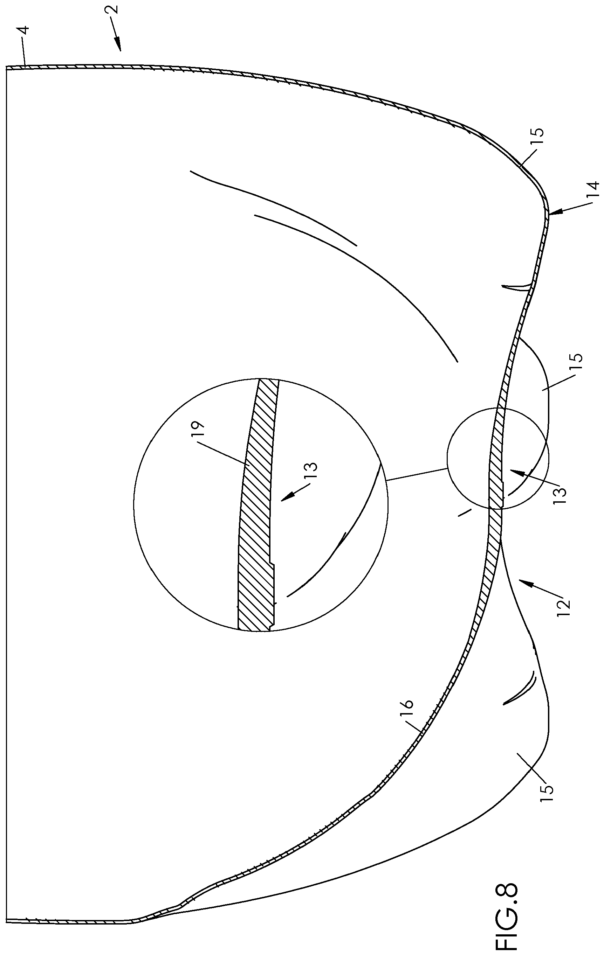

Sur chacune des figures 1, 2 et 3 est représentée une préforme **1** en matière plastique tel que PET (polytéréphtalate d'éthylène), à partir de laquelle un récipient **2** (tel qu'illustré sur la figure 8) est destiné à être formé par soufflage ou étirage soufflage. Chaque préforme **1** comprend, en premier lieu, un corps **3** qui s'étend de manière symétrique de révolution autour d'un axe **X** central. Selon un mode avantageux convenant à la plupart des applications, le corps **3** est cylindrique.

Le corps **3** de la préforme **1** est destiné à former un corps **4** et une épaule (non visible) du récipient **2** (en partie visible sur la figure 8).

Chaque préforme **1** comprend, en deuxième lieu, un col **5** ouvert qui s'étend dans le prolongement du corps **3** à partir d'une extrémité supérieure de celui-ci. Le col **5** présente sa forme finale, qu'il est destiné à conserver tout au long du formage et de la vie du récipient **2**.

Le col **5** est avantageusement séparé du corps **3** par une collerette **6** en saillie radiale, par laquelle la préforme **1** (puis le récipient **2**) est suspendue (ou plus généralement tenue) pendant diverses opérations de convoyage, de chauffe de la préforme **1** ou de formage du récipient **2**, puis, respectivement, de remplissage, bouchage et étiquetage de ce dernier.

Chaque préforme **1** comprend, en troisième lieu, un fond **7** qui ferme le corps **3** à partir d'une extrémité **8** inférieure de celui-ci, c'est-à-dire que la matière du fond **7** s'étend à partir de l'extrémité **8** inférieure du corps **3** (cylindrique) pour venir rejoindre radialement l'axe **X** central et fermer ainsi la préforme **1** à l'opposé du col **5**. Le fond **7** est symétrique de révolution autour de l'axe **X** central, c'est-à-dire qu'il est invariant dans tout plan de coupe longitudinale (autrement dit passant par l'axe X central, correspondant au plan de la feuille sur les figures 1 à 6).

Dans ce qui suit, les termes « concave » et « convexe » s'entendent en référence au volume interne de la préforme **1.** En d'autres termes, une zone est dite concave si sa concavité est tournée vers l'extérieur de la préforme **1,** et, inversement, convexe si sa convexité est tournée vers l'extérieur de la préforme **1.**

Comme on le voit bien sur les figures 1 à 6, le fond **7** présente, en section dans tout plan de coupe longitudinale, une forme en W arrondi.

Plus précisément, le fond **7** présente une concavité **9** centrale et un bourrelet **10** convexe en saillie autour de cette concavité **9,** ce bourrelet **10** définissant une extrémité **11** annulaire de la préforme **1** dans un plan **T** transversal d'extrémité perpendiculaire à l'axe **X** central.

Cette forme est destinée à favoriser la formation d'un fond **12** du récipient **2** ayant une voûte **13** centrale concave et une assise **14** périphérique convexe. Typiquement, et comme cela est illustré sur la figure 8, le fond **12** du récipient **2** à former peut notamment être du type pétaloïde, et comprend une alternance (lorsque considérée angulairement autour de l'axe central) de pieds **15** en saillie et de vallées **16** de forme sensiblement hémisphérique, les pieds **15** se raccordant, en direction du centre, à la voûte **13** centrale.

La préforme **1** présente une face **17** externe et une face **18** interne. Le fond **7** présente une épaisseur, notée $E$, mesurée dans tout plan de coupe longitudinale à partir de la face **17** externe. En d'autres termes, en tout point de la face **17** externe, l'épaisseur $E$ du fond (ou plus généralement de la préforme, à l'exception du col) est la plus petite distance de ce point à la face **18** interne, ou, ce qui revient au même, le rayon du cercle centré sur ce point et tangent à la face **18** interne au droit de ce point.

A la jonction entre la concavité **9** et le bourrelet **10** qui l'entoure, le fond **7** présente, sur sa face **17** externe, dans tout plan de coupe longitudinale, un point **PI** d'inflexion.

Pour les besoins du dimensionnement du fond, on note :

$D$      le diamètre externe du corps **3,** mesuré à la jonction avec le fond **7** (autrement dit, le diamètre hors tout du fond **7)**

$d$      le diamètre de l'extrémité **11,** définie par le bourrelet **10** ;

$h$      la garde du fond **7,** c'est-à-dire la distance, mesurée axialement, séparant le point central du fond **7** du plan **T** transversal ;

$A$      l'angle que forme, avec le plan **T** transversal (ou avec tout autre plan perpendiculaire à l'axe **X** central), la tangente, sur la face **17** externe de la préforme **1,** au point **PI** d'inflexion ;

$S$      l'abscisse curviligne du fond **7,** mesurée dans tout plan de coupe longitudinale sur la face **17** externe, à partir de l'axe **X** central qui en fait office d'origine ;

$L$      la demi-longueur curviligne totale du fond **7,** mesurée dans tout plan de coupe longitudinale sur la face **17** externe à partir de l'axe X central jusqu'à l'extrémité **11** inférieure du corps **3** ;

$S_1$      une valeur de l'abscisse $S$ curviligne telle que $\mathbf{0,2 \cdot L \leq S_1 \leq 0,3 \cdot L}$ ;

$S_2$      une valeur de l'abscisse $S$ curviligne telle que $\mathbf{0,4 \cdot L \leq S_2 \leq 0,6 \cdot L}$ ;

$E_0$      l'épaisseur de la préforme **1** à l'extrémité inférieure du corps **3** ou, en d'autres termes, à la jonction du fond **7** et du corps **3.**

En outre, encore pour les besoins du dimensionnement du fond **3,** on distingue sur celui-ci trois zones concentriques, à savoir :

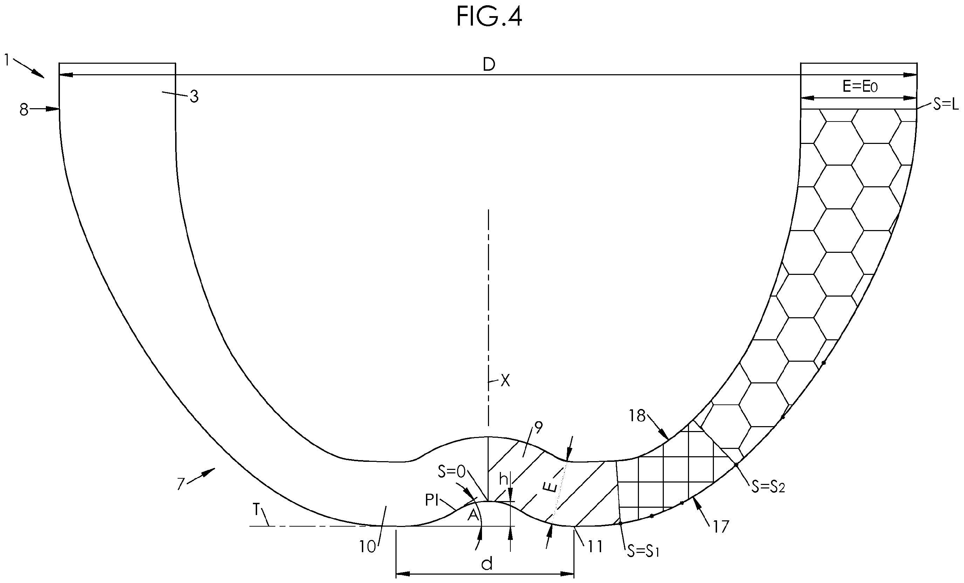

-      une section centrale, définie par une abscisse $S$ curviligne comprise entre l'origine ($S = 0$) et $S_1$, et que l'on note donc $[0;S_1]$ ; cette section centrale est illustrée, sur les figures 4, 5 et 6, par le motif hachuré ;
-      une section intermédiaire, définie par une abscisse $S$ curviligne comprise entre $S_1$ et $S_2$ et que l'on note donc $[S_1;S_2]$ ; cette section intermédiaire est illustrée, sur les figures 4, 5 et 6, par le motif à carreaux ;
-      une section périphérique, définie par une abscisse $S$ curviligne comprise entre $S_2$ et $L$ et que l'on note donc $[S_2;L]$ ; cette section périphérique est illustrée, sur les figures 4, 5 et 6, par un motif en nid d'abeille.

Dans le premier mode de réalisation, illustré sur la figure 4, $S_1$ est de l'ordre de 20% de la demi-longueur $L$ curviligne totale du fond **7,** tandis que $S_2$ est de l'ordre de 40% de celle-ci.

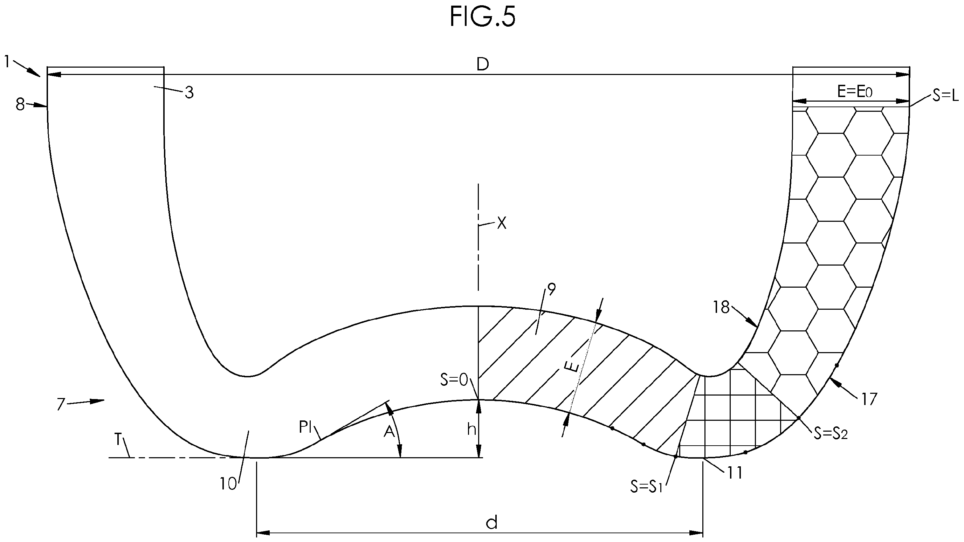

Dans le deuxième mode de réalisation, illustré sur la figure 5, $S_1$ est de l'ordre de 30% de la demi-longueur $L$ curviligne totale du fond **7,** tandis que $S_2$ est de l'ordre de 50% de celle-ci.

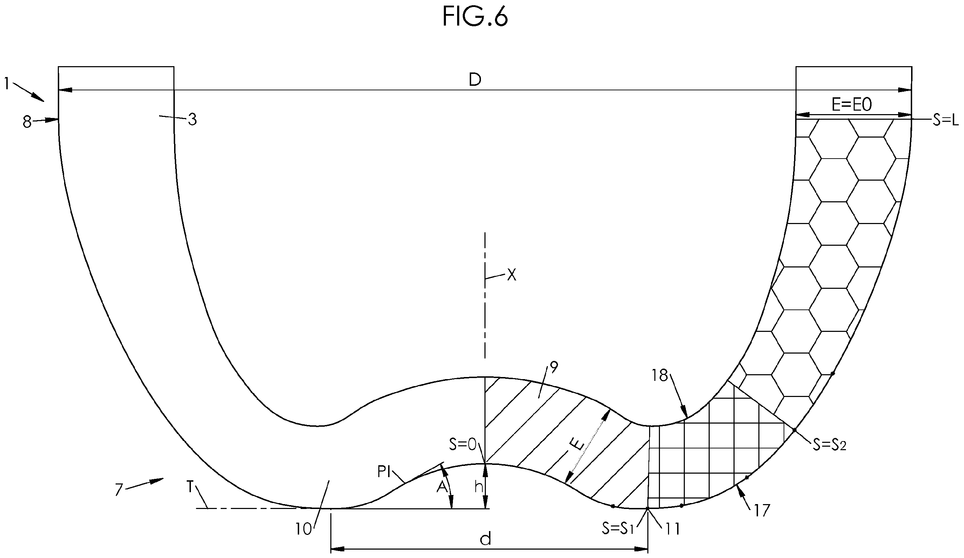

Dans le troisième mode de réalisation, illustré sur la figure 6, $S_1$ est de l'ordre de 25% de la demi-longueur $L$ curviligne totale du fond **7,** tandis que $S_2$ est de l'ordre de 50% de celle-ci.

Pour dimensionner le fond **7,** on a recours à quatre règles géométriques : une règle de diamètre, notée R1, une règle de garde, notée R2, une règle angulaire, notée R3 et une règle d'épaisseur, notée R4, l'objectif étant, rappelons-le, de minimiser l'occurrence (et l'étendue) du phénomène de fissuration, non seulement lors de la formation du fond **12** du récipient **2,** surtout lorsque celui-ci est de forme pétaloïde, mais aussi lorsque le fluide de soufflage du récipient **2** est évacué, alors que le récipient **2** est encore chaud en raison du faible temps de contact avec la paroi de son moule en raison de l'augmentation des cadences de production.

Si les trois premières règles, R1, R2 et R3, sont facultatives, elles sont néanmoins avantageuses car elles contribuent à la réalisation de l'objectif. La quatrième règle, R4, en revanche, est impérative et contribue pour l'essentiel à la réalisation de celui-ci.

Selon la première règle R1, le diamètre $d$ de l'extrémité **11** est lié au diamètre $D$ hors tout du fond **7** par une relation de proportionnalité dans un rapport compris entre 0,2 (20%) et 0,5 (50%) :

$$0{,}2 \cdot D \leq d \leq 0{,}5 \cdot D \qquad (\mathrm{R1})$$

La borne inférieure de cette première règle R1, soit $d \cong 0{,}2 \cdot D$, est illustrée par le premier mode de réalisation représenté sur la figure 4.

La borne supérieure de cette première règle R1, soit $d \cong 0{,}5 \cdot D$, est illustrée par le deuxième mode de réalisation représenté sur la figure 5.

Une valeur intermédiaire de cette première règle R1, $d \cong 0{,}35 \cdot D$, est illustrée par le troisième mode de réalisation représenté sur la figure 6.

Selon la deuxième règle R2, la garde $h$ du fond **7** est liée au diamètre $D$ hors tout du fond **7** par une relation de proportionnalité dans un rapport compris entre 0,02 (2%) et 0,08 (8%) :

$$0{,}02 \cdot D \leq h \leq 0{,}08 \cdot D \qquad (\mathrm{R2})$$

Dans le premier mode de réalisation, illustré sur la figure 4, la garde $h$ est d'environ 3% du diamètre $D$ hors tout du fond **7,** soit :

$$h \cong 0{,}03 \cdot D$$

Dans le deuxième mode de réalisation, illustré sur la figure 5, la garde $h$ est d'environ 7% du diamètre $D$ hors tout du fond **7,** soit :

$$h \cong 0{,}07 \cdot D$$

Dans le troisième mode de réalisation, illustré sur la figure 6, la garde $h$ est d'environ 5% du diamètre $D$ hors tout du fond **7,** soit :

$$h \cong 0{,}05 \cdot D$$

Selon la troisième règle R3, l'angle $A$ de la tangente au point **PI** d'inflexion avec le plan **T** transversal est compris entre 4° et 38° :

$$4° \leq A \leq 38° \qquad (\mathrm{R3})$$

L'angle $A$ est cependant avantageusement compris entre 30° et 35° :

$$30° \leq A \leq 35°$$

Dans le premier mode de réalisation, illustré sur la figure 4, l'angle $A$ est de 32° environ :

$$A \cong 32°$$

Dans le deuxième mode de réalisation, illustré sur la figure 5, l'angle $A$ est de 30° environ :

$$A \cong 30°$$

Dans le troisième mode de réalisation, illustré sur la figure 6, l'angle $A$ est de 29° environ :

$$A \cong 29°$$

Selon la quatrième règle R4, l'épaisseur $E$ du fond **7** est variable en fonction de l'abscisse $S$ curviligne, entre l'origine ($S = 0$) et la jonction avec le corps ($S = L$), selon trois critères, à savoir un premier critère (R4.1) appliqué à la section $[0;S_1]$ centrale, un deuxième critère (R4.2) appliqué à la section $[S_1;S_2]$ intermédiaire et un troisième critère (R4.3) appliqué à la section $[S_2;L]$ périphérique.

Selon le premier critère (R4.1), dans la section $[0;S_1]$ centrale du fond **7**, l'épaisseur $E$ de la préforme 1 est comprise entre 65% et 95% de l'épaisseur $E_0$ de la préforme **1** à l'extrémité **8** inférieure du corps **3** :

$$0,65 \cdot E_0 \le E \le 0,95 \cdot E_0 \qquad (R4.1)$$

De préférence, dans la section $[0;S_1]$ centrale du fond **7**, l'épaisseur $E$ de la préforme **1** est même comprise entre 70% et 80% de l'épaisseur $E_0$ de la préforme **1** à l'extrémité **8** inférieure du corps **3** :

$$0,70 \cdot E_0 \le E \le 0,8 \cdot E_0 \qquad (R4.1)$$

Selon un mode de réalisation préféré illustré sur les figures 4, 5 et 6, dans la section $[0;S_1]$ centrale du fond **7**, l'épaisseur $E$ de la préforme **1** est une fonction affine décroissante de l'épaisseur $E_0$ de la préforme **1** à l'extrémité **8** inférieure du corps **3**, selon la relation suivante :

$$E = K1 \cdot E_0 - K2 \cdot S$$

où $K1$ et $K2$ sont des nombres réels constants strictement positifs.

Dans le premier mode de réalisation, illustré sur la figure 4, $K1$ est de 0,56 environ, et $K2$ de 0,011 environ, de sorte que, dans la section $[0;S_1]$ centrale du fond **7**, l'épaisseur $E$ de la préforme **1** décroît légèrement, à partir du centre, suivant la fonction affine suivante :

$$E = 0,56 \cdot E_0 - 0,011 \cdot S$$

Dans ce cas, compte tenu de la faiblesse du coefficient $K2$, on peut négliger le terme variable et considérer l'épaisseur $E$ grossièrement constante, dans toute la section $[0;S_1]$ centrale du fond **7**, en étant proportionnelle à l'épaisseur $E_0$ :

$$E \cong 0,56 \cdot E_0$$

Dans le deuxième mode de réalisation, illustré sur la figure 5, $K1$ est de 0,8 environ, et $K2$ de 0,043 environ, de sorte que, dans la section $[0;S_1]$ centrale du fond **7**, l'épaisseur $E$ de la préforme **1** décroît légèrement, à partir du centre, suivant la fonction affine suivante :

$$E = 0,8 \cdot E_0 - 0,043 \cdot S$$

Dans ce cas également, compte tenu de la faiblesse du coefficient $K2$, on peut négliger le terme variable et considérer l'épaisseur $E$ grossièrement constante, dans toute la section $[0;S_1]$ centrale du fond **7**, en étant proportionnelle à l'épaisseur $E_0$ :

$$E \cong 0,8 \cdot E_0$$

Dans le troisième mode de réalisation, illustré sur la figure 6, $K1$ est de 0,75 environ, et $K2$ de 0,026 environ, de sorte que, dans la section $[0;S_1]$ centrale du fond **7,** l'épaisseur $E$ de la préforme **1** décroît légèrement, à partir du centre, suivant la fonction affine suivante :

$$E = 0,75 \cdot E_0 - 0,026 \cdot S$$

Dans ce cas encore, compte tenu de la faiblesse du coefficient $K2$, on peut négliger le terme variable et considérer l'épaisseur $E$ grossièrement constante, dans toute la section $[0;S_1]$ centrale du fond **7,** en étant proportionnelle à l'épaisseur $E_0$ :

$$E \cong 0,75 \cdot E_0$$

Selon le deuxième critère (R4.2), dans la section $[S_1;S_2]$ intermédiaire du fond, l'épaisseur $E$ de la préforme **1** est strictement inférieure à sa valeur en tout point de la section $[0;S_1]$ centrale.
En outre, dans la section $[S_1;S_2]$ intermédiaire, l'épaisseur $E$ est de préférence sensiblement constante, tout en étant comprise entre 50% et 75% de l'épaisseur $E_0$ :

$$0,5 \cdot E_0 \leq E \leq 0,75 \cdot E_0$$

Dans le premier mode de réalisation, illustré sur la figure 4, l'épaisseur $E$ est, dans la section $[S_1;S_2]$ intermédiaire, de l'ordre de 54% de l'épaisseur $E_0$ :

$$E \cong 0,54 \cdot E_0$$

Dans le deuxième mode de réalisation, illustré sur la figure 5, l'épaisseur $E$ est, dans la section $[S_1;S_2]$ intermédiaire, de l'ordre de 72% de l'épaisseur $E_0$ :

$$E \cong 0,72 \cdot E_0$$

Dans le troisième mode de réalisation, illustré sur la figure 6, l'épaisseur $E$ est, dans la section $[S_1;S_2]$ intermédiaire, de l'ordre de 70% de l'épaisseur $E_0$ :

$$E \cong 0,70 \cdot E_0$$

Selon le troisième critère (R4.3), dans la section $[S_2;L]$ périphérique du fond **7,** l'épaisseur $E$ de la préforme **1** est croissante (jusqu'à atteindre la valeur $E_0$ à l'extrémité **8** inférieure du corps **3.**
Des essais effectués pour le formage de fonds pétaloïdes (comme le fond **12** illustré sur la figure 8) ont démontré que l'application de la quatrième règle R4 (avantageusement combinée avec l'une ou l'autre des trois premières règles R1, R2, R3 ou avec toutes celles-ci) permet de minimiser le phénomène de fissuration sur un bord **19** interne des pieds **15,** à la jonction avec la voûte **13** centrale.
Une analyse plus détaillée montre que, à la différence des fonds pétaloïdes connus sur lesquels on observe un bourrelet de matière à cette jonction, propice (selon toute vraisemblance) à la fissuration, l'épaisseur du fond **12** pétaloïde réalisé avec une préforme **1** telle que décrite ci-dessus, et en particulier une préforme **1** conforme au troisième mode de réalisation, illustré sur la figure 6, est continûment décroissante depuis la voûte **13** centrale jusqu'aux pieds **15,** sans présenter les bourrelets précités sur le bord interne des pieds. Il est présumé que c'est cette décroissance continue qui minimise le phénomène de fissuration.

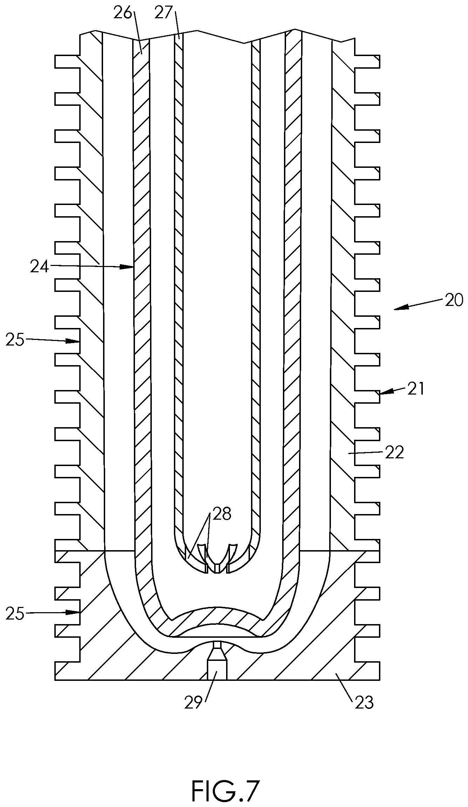

On a partiellement représenté sur la figure 7 un moule **20** pour le formage d'une préforme **1** telle que décrite ci-dessus. Plus précisément, le moule **20** illustré est avantageusement conçu pour permettre la fabrication de la préforme **1** illustrée sur les figures 3 et 6, par simple injection d'une matière plastique (typiquement du PET).

Un tel moule **20** comprend, d'une part, un corps **21** de moule ayant une paroi **22** latérale à l'empreinte de la face **17** externe de la préforme **1** au niveau du corps **3** et un fond **23** de moule à l'empreinte de la face externe **17** de la préforme **1** au niveau du fond **7**, et, d'autre part, un noyau **24** à l'empreinte de la face **18** interne de la préforme **1**.

Le corps **21** de moule et le fond **23** de moule sont fixes, tandis que le noyau **24** est mobile en translation par rapport à ceux-ci pour permettre l'évacuation et le dévêtissement de la préforme **1** une fois formée.

Comme on le voit sur la figure 7, la paroi **22** latérale et le fond **23** de moule sont pourvus, sur leur périphérie, de rainures **25** formant, avec une coque externe (non représentée) des conduits de circulation d'un fluide frigorigène (tel que de l'eau) destiné à assurer le refroidissement, par sa face **17** externe, de la préforme **1** immédiatement après son formage.

Comme on le voit également sur la figure 7, le noyau **24** est pourvu d'une enveloppe **26** externe creuse à l'empreinte de la face **18** interne de la préforme **1**, et d'un injecteur **27** central, également creux, pourvu à une extrémité inférieure d'échancrures **28**.

Un fluide frigorigène (tel que de l'eau), introduit dans l'injecteur **27**, passe par les échancrures **28** et circule entre l'injecteur **27** et l'enveloppe **26** pour réguler la température de celle-ci à une valeur modérée et ainsi assurer le refroidissement, par sa face **18** interne, de la préforme **1** immédiatement après son formage.

La matière (par ex. du PET) est introduite sous forme fondue, au moyen d'un dispositif d'injection (non représenté) par un trou **29** percé au centre du fond **23** de moule.

En variante, on peut imaginer de former la préforme **1** par d'autres techniques que l'injection simple, notamment l'injection-compression.

## Revendications

1. Préforme **(1)** de récipient en matière plastique, qui comprend

   - un corps **(3)** symétrique de révolution autour d'un axe **(X)** central,
   - un col **(5)** ouvert qui s'étend dans le prolongement du corps **(3)** à partir d'une extrémité supérieure de celui-ci, et
   - un fond **(7)** qui ferme le corps **(3)** à partir d'une extrémité **(8)** inférieure de celui-ci, le fond **(7)** étant symétrique de révolution autour de l'axe **(X)** central et ayant une concavité **(9)** centrale et un bourrelet **(10)** en saillie autour de cette concavité **(9)**, le fond **(7)** présentant une épaisseur $E$ variable, mesurée à partir d'une face **(17)** externe, cette préforme **(1)** étant **caractérisée en ce que**, dans tout plan de coupe passant par l'axe **(X)** central, l'épaisseur $E$ du fond **(7)** vérifie les règles géométriques (R4.1), (R4.2) et (R4.3) ci-après, étant donnés :

   $S$ l'abscisse curviligne mesurée sur la face **(17)** externe, à partir de l'axe **(X)** central qui en fait office d'origine ;
   $L$ la demi-longueur curviligne totale du fond **(7)**, mesurée sur la face **(17)** externe à partir de l'axe **(X)** central jusqu'à l'extrémité **(8)** inférieure du corps **(3)** ;
   $S_1$ une valeur de l'abscisse $S$ curviligne telle que $\mathbf{0{,}2} \cdot L \leq S_1 \leq \mathbf{0{,}3} \cdot L$ ;
   $S_2$ une valeur de l'abscisse $S$ curviligne telle que $\mathbf{0{,}4} \cdot L \leq S_2 \leq \mathbf{0{,}6} \cdot L$ ;
   $E_0$ l'épaisseur de la préforme **(1)** à l'extrémité **(8)** inférieure du corps **(3)** ;
   $[0;S_1]$ une section centrale du fond **(7)**, définie par une abscisse curviligne comprise entre l'origine et $S_1$ ;
   $[S_1;S_2]$ une section intermédiaire du fond **(7)**, définie par une abscisse curviligne comprise entre $S_1$ et $S_2$ ;
   $[S_2;L]$ une section périphérique du fond **(7)**, définie par une abscisse curviligne comprise entre $S_2$ et $L$ ;
   (R4.1) dans la section $[0;S_1]$ centrale du fond **(7)**, l'épaisseur $E$ de la préforme **(1)** est telle que :

   $$0{,}65 \cdot E_0 \leq E \leq 0{,}95 \cdot E_0$$

   (R4.2) dans la section $[S_1;S_2]$ intermédiaire du fond **(7)**, l'épaisseur $E$ de la préforme **(1)** est strictement inférieure à sa valeur en tout point de la section $[0;S_1]$ centrale ;
   (R4.3) dans la section $[S_2;L]$ périphérique du fond, l'épaisseur $E$ de la préforme **(1)** est croissante.

2. Préforme **(1)** selon la revendication 1, dans laquelle, dans la section $[0;S_1]$ centrale du fond **(7)**, l'épaisseur $E$ de la préforme **(1)** est telle que :

$$0,70 \cdot E_0 \leq E \leq 0,80 \cdot E_0$$

3.  Préforme **(1)** selon la revendication 2, dans laquelle, dans la section [**0**;$S_1$] centrale du fond **(7)**, l'épaisseur $E$ de la préforme **(1)** est telle que :

$$E \cong 0,75 \cdot E_0$$

4.  Préforme **(1)** selon la revendication 3, dans laquelle, dans la section [$S_1$;$S_2$] intermédiaire du fond **(7)**, l'épaisseur $E$ de la préforme **(1)** est telle que :

$$E \cong 0,70 \cdot E_0$$

5.  Préforme **(1)** selon l'une des revendications précédentes, qui vérifie en outre la règle géométrique (R**1**) suivante :

$$0,2 \cdot D \leq d \leq 0,5 \cdot D \qquad\qquad (\mathsf{R1})$$

où :

   *d* est le diamètre d'une extrémité **(11)** du fond **(7)**, définie par le bourrelet **(10)** ;
   *D* est le diamètre externe du corps **(3)**, mesuré à la jonction avec le fond **(7)**.

6.  Préforme **(1)** selon la revendication 5, dans laquelle :

$$d \cong 0,35 \cdot D$$

7.  Préforme **(1)** selon l'une des revendications précédentes, qui vérifie en outre la règle géométrique **(R2)** suivante :

$$0,02 \cdot D \leq h \leq 0,08 \cdot D \qquad\qquad (\mathsf{R2})$$

où *h* est la garde du fond **(7)**, mesurée entre le centre du fond **(7)** et une extrémité **(11)** définie par le bourrelet **(10)**.

8.  Préforme **(1)** selon la revendication 7, dans laquelle :

$$h \cong 0,05 \cdot D$$

9.  Préforme **(1)** selon l'une des revendications précédentes, qui vérifie en outre la règle géométrique (R**3**) suivante :

$$4° \leq A \leq 38° \qquad\qquad (\mathsf{R3})$$

où A est l'angle que forme, avec tout plan transversal perpendiculaire à l'axe **(X)** central, la tangente, sur la face **(17)** externe de la préforme (1), à un point **(PI)** d'inflexion situé à la jonction entre la concavité **(9)** centrale et le bourrelet **(10)**.

10. Préforme selon la revendication 9, dans laquelle :

$$30° \leq A \leq 35°$$

11. Moule **(20)** pour le formage d'une préforme **(1)** selon l'une des revendications précédentes, qui comprend :

- un corps **(21)** de moule ayant une paroi **(22)** latérale à l'empreinte d'une face externe du corps **(3)** de la préforme **(1)** et un fond **(23)** de moule à l'empreinte d'une face externe du fond **(7)** de la préforme (**1**) ;
- un noyau **(24)** à l'empreinte d'une face (**18**) interne de la préforme (**1**).

**Patentansprüche**

1. Vorform (1) eines Behälters aus Kunststoff, welche umfasst:

   - einen um eine Mittelachse (X) rotationssymmetrischen Körper (3),
   - einen offenen Hals (5), welcher sich in der Verlängerung des Körpers (3) von einem oberen Ende desselben aus erstreckt,
   - einen Boden (7), welcher den Körper (3) von einem unteren Ende (8) desselben aus verschließt, wobei der Boden (7) rotationssymmetrisch um die Mittelachse (X) ist und eine zentrale Konkavität (9) und einen um diese Konkavität (9) herum vorstehenden Wulst (10) aufweist, wobei der Boden (7) eine variable Dicke E aufweist, die von einer Außenfläche (17) aus gemessen wird,
   wobei diese Vorform (1) **dadurch gekennzeichnet ist, dass** in jeder durch die Mittelachse (X) verlaufenden Schnittebene die Dicke $E$ des Bodens (7) die unten angegebenen geometrischen Bedingungen (R4.1), (R4.2) und (R4.3) erfüllt, wenn gegeben sind:

   $S$ die krummlinige Abszisse, gemessen auf der Außenfläche (17) von der Mittelachse (X) aus, welche für sie als Ursprung dient;
   $L$ die halbe krummlinige Gesamtlänge des Bodens (7), gemessen auf der Außenfläche (17) von der Mittelachse (X) aus bis zum unteren Ende (8) des Körpers (3);
   $S_1$ ein solcher Wert der krummlinigen Abszisse $S$, dass gilt: $0,2 \cdot L \leq S_1 \leq 0,3 \cdot L$;
   $S_2$ ein solcher Wert der krummlinigen Abszisse $S$, dass gilt: $0,4 \cdot L \leq S_2 \leq 0,6 \cdot L;$
   $E_0$ die Dicke der Vorform (1) am unteren Ende (8) des Körpers (3);
   $[0; S_1]$ ein mittlerer Abschnitt des Bodens (7), definiert durch eine krummlinige Abszisse zwischen dem Ursprung und $S_1$ ;
   $[S_1; S_2]$ ein Zwischenabschnitt des Bodens (7), definiert durch eine krummlinige Abszisse zwischen $S_1$ und $S_2$;
   $[S_2; L]$ ein Umfangsabschnitt des Bodens (7), definiert durch eine krummlinige Abszisse zwischen $S_2$ und $L$;
   (R4.1) im mittleren Abschnitt $[0; S_1]$ des Bodens (7) gilt für die Dicke E der Vorform (1):

   $$0,65 \cdot E_0 \leq E \leq 0,95 \cdot E_0$$

   (R4.2) im Zwischenabschnitt $[S_1; S_2]$ des Bodens (7) ist die Dicke $E$ der Vorform (1) streng kleiner als ihr Wert in jedem Punkt des mittleren Abschnitts $[0; S_1]$;
   (R4.3) im Umfangsabschnitt $[S_2; L]$ des Bodens ist die Dicke E der Vorform (1) wachsend.

2. Vorform (1) nach Anspruch 1, wobei im mittleren Abschnitt $[0; S_1]$ des Bodens (7) für die Dicke $E$ der Vorform (1) gilt:

   $$0,70 \cdot E_0 \leq E \leq 0,80 \cdot E_0$$

3. Vorform (1) nach Anspruch 2, wobei im mittleren Abschnitt $[0; S_1]$ des Bodens (7) für die Dicke $E$ der Vorform (1) gilt:

   $$E \cong 0,75 \cdot E_0$$

4. Vorform (1) nach Anspruch 3, wobei im Zwischenabschnitt $[S_1; S_2]$ des Bodens (7) für die Dicke $E$ der Vorform (1) gilt:

   $$E \cong 0,70 \cdot E_0$$

5. Vorform (1) nach einem der vorhergehenden Ansprüche, welche außerdem die folgende geometrische Bedingung (R1) erfüllt:

$$0,2 \cdot D \leq d \leq 0,5 \cdot D, \qquad (R1)$$

wobei:

*d* der Durchmesser eines Endes (11) des Bodens (7) ist, das durch den Wulst (10) definiert ist;
*D* der Außendurchmesser des Körpers (3) ist, gemessen an der Verbindungsstelle mit dem Boden (7).

6. Vorform (1) nach Anspruch 5, wobei:

$$d \cong 0,35 \cdot D$$

7. Vorform (1) nach einem der vorhergehenden Ansprüche, welche außerdem die folgende geometrische Bedingung (R2) erfüllt:

$$0,02 \cdot D \leq h \leq 0,08 \cdot D, \qquad (R2)$$

wobei *h* die Wölbungshöhe des Bodens (7) ist, gemessen zwischen dem Mittelpunkt des Bodens (7) und einem durch den Wulst (10) definierten Ende (11).

8. Vorform (1) nach Anspruch 7, wobei:

$$h \cong 0,05 \cdot D$$

9. Vorform (1) nach einem der vorhergehenden Ansprüche, welche außerdem die folgende geometrische Bedingung (R3) erfüllt:

$$4° \leq A \leq 38°, \qquad (R3)$$

wobei *A* der Winkel ist, den die Tangente an die Außenfläche (17) der Vorform (1) in einem Wendepunkt (PI), der sich an der Verbindungsstelle zwischen der zentralen Konkavität (9) und dem Wulst (10) befindet, mit jeder zur Mittelachse (X) senkrechten Querebene bildet.

10. Vorform nach Anspruch 9, wobei:

$$30° \leq A \leq 35°$$

11. Formwerkzeug (20) zum Formen einer Vorform (1) nach einem der vorhergehenden Ansprüche, welches umfasst:

- einen Formkörper (21), der eine Seitenwand (22) mit dem Formabdruck einer Außenfläche des Körpers (3) der Vorform (1) und einen Formboden (23) mit dem Formabdruck einer Außenfläche des Bodens (7) der Vorform (1) aufweist;
- einen Kern (24) mit dem Formabdruck einer Innenfläche (18) der Vorform (1).


**Claims**

1. Preform (1) for a container made of plastic material, which comprises

- a body (3) symmetric in revolution about a central axis (X),

- an open neck (5) that extends in the extension of the body (3) from an upper end thereof, and
- a bottom (7) which closes the body (3) from a lower end (8) thereof, the bottom (7) being symmetric in revolution about the central axis (X) and having a central concavity (9) and a projecting bead (10) around this concavity (9), the bottom (7) having a variable thickness $E$, measured from an external face (17),

this preform (1) being **characterized in that**, in any plane of section passing through the central axis (X), the thickness $E$ of the bottom (7) satisfies the geometric rules (R4.1), (R4.2) and (R4.3) below, where:

$S$ is the curved abscissa measured on the external face (17), from the central axis (X) which serves as the origin;

$L$ is the total, curved half-length of the bottom (7), measured on the external face (17) from the central axis (X) to the lower end (8) of the body (3);

$S_1$ is a value of the curved abscissa S such that $0.2 \cdot L \leq S_1 \leq 0.3 \cdot L$;

$S_2$ is a value of the curved abscissa S such that $0.4 \cdot L \leq S_2 \leq 0.6 \cdot L$;

$E_0$ is the thickness of the preform (1) at the lower end (8) of the body (3);

$[0; S_1]$ is a central section of the bottom (7), defined by a curved abscissa contained between the origin and $S_1$;

$[S1; S2]$ is an intermediate section of the bottom (7), defined by a curved abscissa contained between $S_1$ and $S_2$;

$[S_2; L]$ is a peripheral section of the bottom (7), defined by a curved abscissa contained between $S_2$ and $L$;

(R4.1) in the central section $[0; S_1]$ of the bottom (7), the thickness $E$ of the preform (1) is such that:

$$0.65 \cdot E_0 \ \leq \ E \ \leq \ 0.95 \cdot E_0;$$

(R4.2) in the intermediate section $[S_1; S_2]$ of the bottom (7), the thickness $E$ of the preform (1) is strictly less than its value at any point in the central section $[0; S_1]$ ;

(R4.3) in the peripheral section $[S_2; L]$ of the bottom, the thickness $E$ of the preform (1) is increasing.

2. Preform (1) according to Claim 1, in which, in the central section $[0; S_1]$ of the bottom (7), the thickness $E$ of the preform (1) is such that:

$$0.70 \cdot E_0 \ \leq \ E \ \leq \ 0.80 \cdot E_0.$$

3. Preform (1) according to Claim 2, in which, in the central section $[0; S_1]$ of the bottom (7), the thickness $E$ of the preform (1) is such that:

$$E \ \approx \ 0.75 \cdot E_0.$$

4. Preform (1) according to Claim 3, in which, in the intermediate section $[S_1; S_2]$ of the bottom (7), the thickness $E$ of the preform (1) is such that:

$$E \ \approx \ 0.70 \cdot E_0.$$

5. Preform (1) according to one of the preceding claims, which further satisfies the following geometric rule (R1):

$$0.2 \cdot D \ \leq \ d \ \leq \ 0.5 \cdot D \qquad\qquad (R1)$$

where:

$d$ is the diameter of an end (11) of the bottom (7), defined by the bead (10);

$D$ is the external diameter of the body (3), measured at the junction with the bottom (7).

6. Preform (1) according to Claim 5, in which:

$$d \approx 0.35 \cdot D.$$

**7.** Preform (1) according to one of the preceding claims, which further satisfies the following geometric rule (R2):

$$0.02 \cdot D \leq h \leq 0.08 \cdot D \qquad (R2)$$

where *h* is the clearance of the bottom (7), measured between the centre of the bottom (7) and an end (11) defined by the bead (10).

**8.** Preform (1) according to Claim 7, in which:

$$h \approx 0.05 \cdot D.$$

**9.** Preform (1) according to one of the preceding claims, which further satisfies the following geometric rule (R3):

$$4° \leq A \leq 38° \qquad (R3)$$

where A is the angle formed, with any transverse plane perpendicular to the central axis (X), by the tangent, on the external face (17) of the preform (1), at a point of inflection (PI) located at the junction between the central concavity (9) and the bead (10).

**10.** Preform according to Claim 9, in which:

$$30° \leq A \leq 35°.$$

**11.** Mould (20) for forming a preform (1) according to one of the preceding claims, which comprises:

- a mould body (21) having a side wall (22) in the shape of an external face of the body (3) of the preform (1) and a mould bottom (23) in the shape of an external face of the bottom (7) of the preform (1);
- a core (24) in the shape of an internal face (18) of the preform (1).

FIG.3

FIG.2

FIG.1

# FIG.4

EP 3 389 970 B1

FIG.5

FIG.6

FIG.7

FIG.8

EP 3 389 970 B1

**RÉFÉRENCES CITÉES DANS LA DESCRIPTION**

**Documents brevets cités dans la description**

- EP 2697024 A
- US 2014030461 A
- US 20130244050 A